# EUROPEAN PATENT SPECIFICATION

(11) **EP 1 304 831 B1**
(45) Date of publication and mention of the grant of the patent: **04.04.2007**
(21) Application number: 02396118.8
(22) Date of filing: 17.07.2002
(51) Int. Cl.: H04L 12/26, H04L 12/24, H04L 29/06, H04Q 7/34, H04Q 7/22, H04L 12/56

(54) **Monitoring and transmission of QoS-data in a telecommunication network**
Überwachung und Übertragung von QOS-Daten in einem Telekommunikationsnetzwerk
Surveillance et transmission de données QOS dans un réseau de télécommunication

(30) Priority: 16.08.2001 FI 20011657
(43) Date of publication of application: 23.04.2003
(73) Proprietor: TeliaSonera Finland Oyj, 00510 Helsinki (FI)
(72) Inventor: Korhonen, Jouni, 11100 Riihimäki (FI); Laukkanen, Mikko, 02600 Espoo (FI); Laamanen, Heimo, 00370 Helsinki (FI)
(74) Representative: Simmelvuo, Markku Kalevi

(56) References cited:
- EP-A- 0 975 123
- EP-A- 1 113 628
- US-A1- 2001 001 268
- ONOE Y ET AL: "Evaluation of media scaling applied multicast protocol" REAL-TIME COMPUTING SYSTEMS AND APPLICATIONS, 1997. PROCEEDINGS., FOURTH INTERNATIONAL WORKSHOP ON TAIPEI, TAIWAN 27-29 OCT. 1997, LOS ALAMITOS, CA, USA,IEEE COMPUT. SOC, US, 27 October 1997 (1997-10-27), pages 26-33, XP010251843 ISBN: 0-8186-8073-3
- JANEVSKI T ET AL: "QoS analyses of multimedia traffic in heterogeneous wireless IP networks" UNIVERSITY SKOPJE, INSTITUTE OF TELECOMMUNICATIONS, XP010534043 Skopje

## Description

### FIELD OF THE INVENTION

The present invention relates to telecommunication technology. The present invention concerns a method and system for distributing, transferring and monitoring QoS data in a packet-switched mobile communication network.

### BACKGROUND OF THE INVENTION

Wireless connection technology for connecting to different telecommunication networks is becoming increasingly important and favored in systems using the IP protocol (IP, Internet Protocol). At present, the prevailing connection technology is that using wired connections. The Internet is a packet-switched network, in which it is traditionally not possible to guarantee successful transmission of packets. The Internet is a so-called "best effort" network. As it is not possible to provide a guaranteed quality of service, there are variations in communication parameters essential to service, e.g. transfer rate, delay, variation of delay, error ratio, etc. Most applications, e.g. speech communication, real-time video images etc. transmitted in a packet-switched network are subject to variations of quality of the telecommunication connection.

The variation of quality of service has created a need to be able to guarantee a certain level of quality of service (QoS) regarding transmission of information over the Internet. In telecommunication networks, network performance is described, among other things, in terms of data transfer speed in transmissions of information from a sender to a receiver. Quality of service (QoS) describes the performance of the data stream in transmitting an IP packet from sender to receiver. Quality of service (QoS) is measured e.g. in terms of transfer rate, delay, variation of delay and error ratio. To solve the problem of guaranteeing a certain level of quality of service, it is possible to use e.g. the Integrated Services (Int-Serv) architecture (RFC 2211, RFC 2212, RFC 2215) and the RSVP protocol (RSVP, Resource Reservation Protocol) (RFC 2205, RFC 2206, RFC 2207, RFC 2208, RFC 2209, RFC2210). In addition, a Differentiated Services model (DiffServ) has been presented. The UMTS (Universal Mobile Telecommunication System) is a third-generation (3G) mobile communication system that allows wide-band wireless data transfer. The UMTS is a packet-switched mobile communication system in which it is possible to transmit both speech, video images, text and multimedia content at a rate of almost 2Mb/s in the most favorable case. The UMTS allows mobile terminals to communicate with a telecommunication network via fast packet-switched connections over a large geographic area. However, the level of quality of data transfer may vary considerably depending on location, time and network load. Traditional mobile communication systems are mainly of a circuit-switched type, in other words, the connection to be set up is reserved from end to end for the entire duration of the connection.

However, packet-switched communication involves several problematic issues. An IP-based packet-switched network is basically a "best effort" network, in other words, packets are transmitted to their destination within the limits allowed by the network, without providing any guarantee of packets reaching their destination. Problems relating to a packet-switched network were already discussed above.

The 3G TR 23.907 (version 1.1.0) is a specification of the QoS concept, defining for an UMTS network QoS functions serving to collect QoS data from different elements of the UMTS network.

Traditionally, QoS data is collected by applications requiring such data. In addition, QoS data is commonly distributed over the network using protocols specialized for this function, which in practice are often application area-specific. The distribution of QoS data is implemented as one-way feedback, and in addition the protocols may get stuck on a firewall. The protocols used for distribution of QoS data often require the set-up of a separate session. UMTS network-specific information is not obtained by merely monitoring end-to-end traffic. In addition, the protocols used for distribution of QoS data produce an extra load on the network

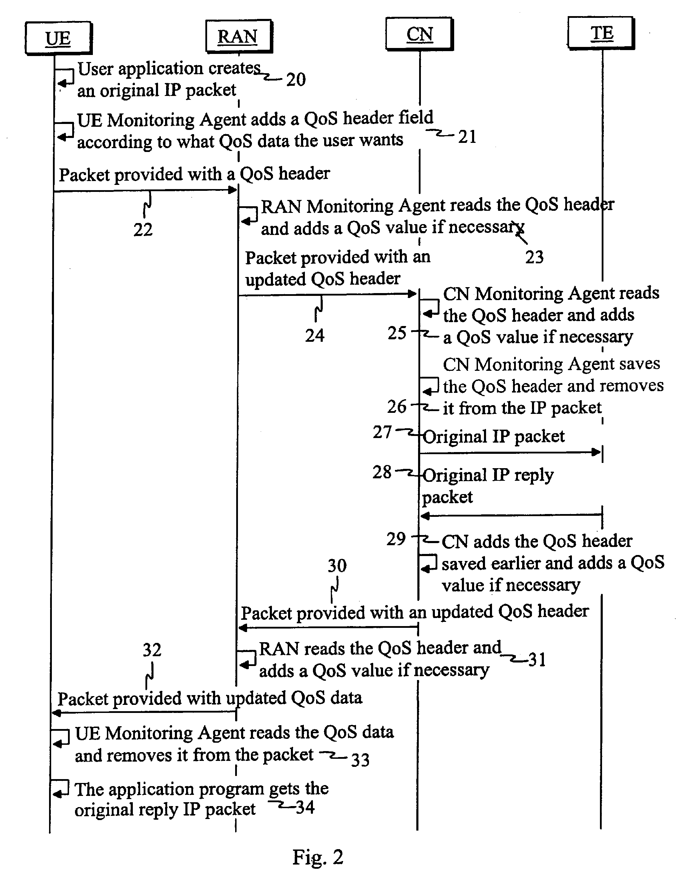

As one solution in prior art, document "A Framework for QoS Support in Mobile IPv6" (IETF Mobile IP Working Group, Chaskar et al., Nokia Research Center, March 2001) discloses QoS (Quality of Service) signalling in such a way that QoS data is using one extension header in a IPv6 packet. One header can include data of several QoS objects, where one object includes one packet stream which is unidirectional and achieved from a mobile node. As can be seen in figure 2 of the document, a QoS object includes data blocks such as e.g. a QoS requirement, average data rate, peak data rate, maximum packet size and values of packet classification parameters.

### OBJECT OF THE INVENTION

The object of the invention is to eliminate the above-mentioned drawbacks or at least to significantly alleviate them. A specific object of the invention is to disclose a method and system that enable QoS data to be monitored, transferred and distributed in a new way in a packet-switched mobile communication network.

### BRIEF DESCRIPTION OF THE INVENTION

The present invention relates to a method for monitoring, transferring and distributing channel-specific QoS data in a packet-switched mobile communication network. In the method, QoS data is collected in different elements of the packet-switched mobile communication network. According to the invention, the QoS data is retrieved by monitoring agents and there are at least two monitoring agents with each one placed in a network element. Further according to the invention, the QoS data is processed by at least one of the monitoring agents. Further according to the invention, the QoS data is transferred in extension fields of IP header data by the monitoring agents. Each QoS value is preceded in the IP packet by a header field that tells the desired QoS data. The header extension field consists of a message type field, a requester field, a direction field and a type field. The transmission of QoS data works on the request - reply principle. The request is sent in a Request field and the reply in a Replied field. To add QoS data to an IP packet, methods of forming an extension header as defined in the RFC791 or RFC2460 are used. An IP packet provided with QoS data must not be fragmented. This is preferably indicated by using a "don't fragment" bit.

The information transmitted in the extension headers of IP packets can be processed by pre-processing and refining the QoS data by at least one of the monitoring agents so as to give it a form used by applications that need QoS data.

The invention also concerns a system for transferring and distributing channel-specific QoS data in a packet-switched mobile communication network. The system comprises a packet-switched mobile communication network, a terminal communicating with the packet-switched mobile communication network and QoS components used to collect QoS data from different elements of the packet-switched mobile communication network. According to the invention, the system further comprises a monitoring agent in each of at least two elements of the packet-switched mobile communication network. The monitoring agent comprises information retrieval means for retrieval of the QoS data from QoS components of the elements of the packet-switched mobile communication network, processing means for pre-processing and refining the QoS data in at least one of the monitoring agents, setting means for setting the QoS data into a header data extension field of an IP packet, and removing means for removing the QoS data from the header data extension field of an IP packet.

In an embodiment of the invention, the system further comprises communication means for distributing QoS data to applications that use QoS data.

In an embodiment of the invention, the IP packet is consistent with the IPv4 or IPv6 version.

In an embodiment of the invention, the packet-switched mobile communication network is an UMTS network.

Furthermore, the present invention also concerns a computer program for monitoring, transferring and distributing channel-specific QoS data in a packet-switched mobile communication network. The computer program is adapted to perform the same steps as is performed by the above mentioned system components according to the corresponding method.

The present invention enables QoS data to pass through firewalls if the IP packet in question at all has a possibility to pass through a firewall. In addition, QoS data is not limited to the QoS data of an end-to-end connection; instead, the QoS data of every UMTS network element in which a monitoring agent as disclosed in the invention has been implemented is available. Furthermore, in the present invention QoS data is not application-specific but covers all communication. No session is needed for the transmission of QoS data; instead, QoS data is carried along with IP packets. In addition, in the present invention, a prompt reaction to a change in QoS data is possible.

In an implementation according to the present invention, UMTS network-specific information is obtained directly from the network itself, not only by monitoring end-to-end communication. Moreover, the QoS data is indifferent to the application and protocols used, and no session needs to be set up between applications to allow distribution of QoS data. As no separate protocol is used for distribution of QoS data, no extra signaling load is imposed on the network.

### LIST OF ILLUSTRATIONS

In the following, the invention will be described in detail by the aid of a few examples of its embodiments with reference to the attached drawings, wherein
Fig. 1 presents a preferred example of the system of the invention, and
Fig. 2 presents a preferred signal flow diagram example of the operation of the present invention.

### DETAILED DESCRIPTION OF THE INVENTION

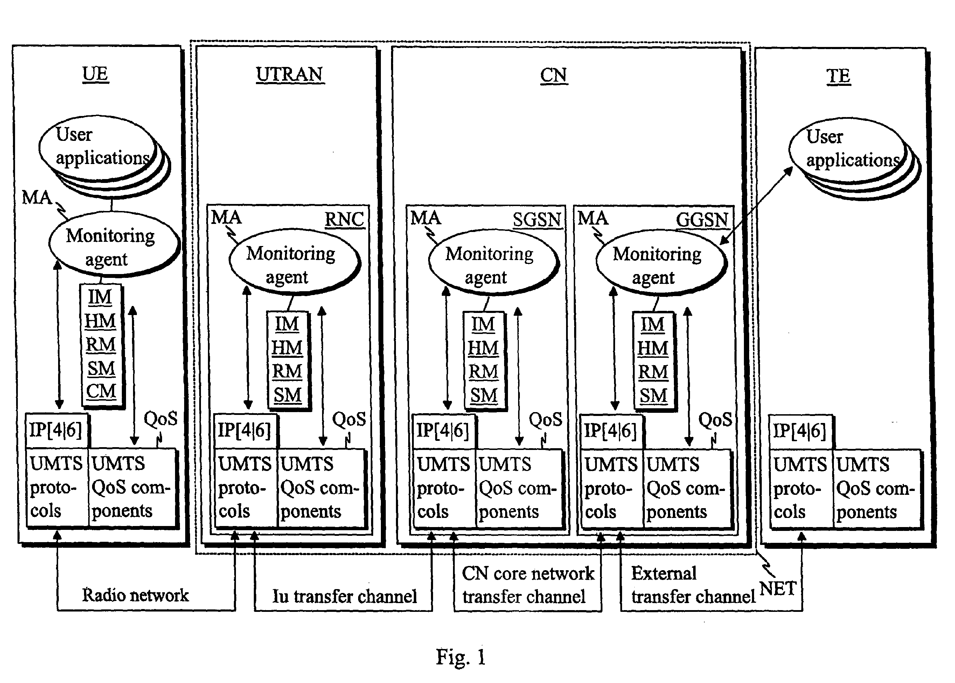

The system presented in Fig. 1 comprises user equipment UE (UE, User Equipment), a radio access network UTRAN (UTRAN, UMTS Radio Access Network), a core network CN (CN, Core Network) and terminal equipment TE external to the UMTS network. Of the telecommunication network NET in Fig. 1, only components and functionalities essential to the invention are shown.

The QoS Concept specification (3G TR 23.907 1.2.0) defines QoS functions to be used in an UMTS network to monitor and maintain the level of quality of the UMTS network. These functions are referred to only as a single set of functions (UMTS QoS components), which enable the transmission of QoS data over a manufacturer-specific interface to applications. IPv [4|6] refers to the IP protocol version (IPv4 or IPv6) used, under which the UMTS network-specific protocols operate.

In the system presented in Fig. 1, QoS data obtained from the UMTS QoS components is transmitted to a monitoring agent MA. The monitoring agent MA has three functions, the first of which is to pre-process and refine QoS data into a form suited for applications. These activities include e.g. the calculation of transfer rate, standard deviations and calculation of percentages e.g. in loss of packets. A monitoring agent MA is placed at least in the user equipment UE, in the RNC and in the SGSN (SGSN, (Serving GPRS Support Node) and GGSN (GGSN, GPRS Gateway Support Node). If necessary, a monitoring agent MA may also be placed in other network elements than those presented in Fig. 1.

The second function of the monitoring agent MA is to transmit QoS data in the network, using IPv4 or IPv6 headers. The interface between the monitoring agent MA and the IP layer to be used is operating system/implementation specific, because the implementation of the IP layer may vary depending on operating system and manufacturer.

The third function of the monitoring agent MA is to distribute QoS data to user applications. It is to be noted that this functionality is only needed in user equipment, not in the network elements of the UMTS network. For this purpose, the monitoring agent MA comprises communication means CM for the distribution of QoS data to applications that use QoS data.

For distribution of information, the monitoring agent MA uses the FIPA-ACL (FIPA, Foundation for Intelligent Physical Agents; ACL, Agent Communication Language) language, which is used in communication between agents. In addition, the monitoring agent MA provides two ways of requesting QoS data: by direct query and by subscribing. In the case of direct query, the user application sends to the monitoring agent MA a query about current QoS data and the monitoring agent MA responds to the query immediately. When the subscribe mode is used, the user application sends to the monitoring agent MA a subscription in which the monitoring agent MA is requested to send a notification every time the QoS data changes according to certain criteria, or to notify at time intervals specified in the subscription. The above-described interactions and the message formats used in them are described in the FIPA Nomadic Application Support Specification documents.

A monitoring agent MA according to Fig. 1 comprises information retrieval means for retrieving QoS data from the QoS components QoS of the elements of the packet-switched mobile communication network, processing means HM for pre-processing and refining QoS data, setting means SM for setting QoS data into header extension field of the IP packet, and removing means RM for removing QoS data from the header extension field of the IP packet. The means listed above are implemented in a manner known in itself, e.g. by software, and they will not be described here in detail.

Fig. 2 presents a preferred signal flow diagram example illustrating the operation of the invention. As indicated by arrow 20, a user application creates an original IP packet, which is to be sent into the network. The monitoring agent MA in a mobile station UE adds a QoS header field according to the QoS data wanted by the user, arrow 21. The QoS data is carried in the IPv4 and IPv6 header data extension fields. An IP packet provided with QoS data must not be fragmented, so in IPv4 the DF (don't fragment) bit has to be set. Likewise in IPv6 the sending node must not fragment the IP packet. QoS data is transmitted in a Request - Reply fashion. Desired QoS data is requested by a Request field and the reply to the request is received in a Replied field in the return packets. Requests that cannot be carried out are indicated by a NotSupported field.

As indicated by arrow 22, the mobile station UE sends a packet provided with a QoS header to the radio access network section (RAN, Radio Access Network). The radio access network section RAN also contains a monitoring agent MA, which reads the QoS header, adds a QoS value to it if necessary and sends the packet provided with an updated QoS header further to the core network CN, e.g. SGSN, arrows 23 and 24. A component in the core network CN also comprises a monitoring agent MA, which reads the QoS header and, if necessary, adds a QoS value, arrow 25. The monitoring agent MA of the core network CN saves the QoS header, removes the saved QoS header from the IP packet and sends the original IP packet to the terminal equipment TE, arrows 26 and 27. IP packets provided with QoS data are not allowed to get out from the core network CN; instead, either the GGSN or ultimately a specific QoS node behind the GGSN removes the QoS fields from the IP packets.

As indicated by arrow 28, the terminal equipment TE sends the original IP reply packet over the core network CN. In the core network CN, the QoS header that was saved earlier is added, and if necessary, a QoS value is added as well, arrow 29. The packet provided with updated QoS data is sent back to the radio access network section RAN, arrow 30. The radio access network section RAN reads the QoS header, adds a QoS value if necessary and sends the packet provided with updated QoS data to the mobile station UE, arrows 31 and 32.

The monitoring agent MA in the mobile station UE reads the QoS data from the IP packet and removes it, arrow 33. Thus, the application program in the mobile station UE receives the original IP reply packet, arrow 34.

The counterpart of the mobile communication network user equipment UE may also be another piece of user equipment UE in the UMTS network and not necessarily a network element in a wired network (Internet, PSTN, ISDN, etc.). Requesting and adding QoS data to the IP packets requires that the IP stacks of the UE, RNC and GGSN (of the specific QoS node behind the GGSN) continuously modify the IP packets. For example, if the RNC receives an IP packet provided with a Request message, then the IP stack of the RNC must add the desired QoS data to the IP packet, providing it with a Replied field, and remove the original Request field.

In both IPv4 and IPv6, the presentation of the QoS data itself in the IP header is identical. Each QoS value is preceded by an eight-bit header field, which tells the desired QoS data. The length of the entire QoS header field and of the QoS data depends on the information desired.

The structure of the header field is presented below: 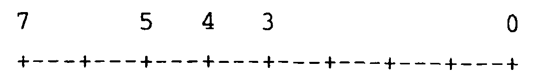 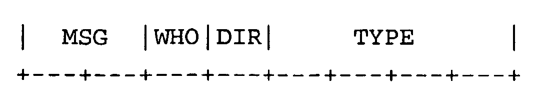
- MSG:: Type of QoS message
00 Request
01 Replied
10 Not supported
11 Not defined
- WHO:: Who is requesting QoS data, UE or Core
0 UE
1 Core (GGSN / QoS node)
- DIR:: From which direction is the data to be obtained, Uplink or Downlink
0 UL
1 DL
- TYPE:: QoS data desired
0000 line rate
0001 packet drop rate
0010 BER
0011...1111 not yet defined

In the Replied messages, the required QoS data is added after the Replied field. Data added may be of fixed or variable length. The QoS data are included (so-called PiggyBagging) in IP communication (TCP/IP, TCP, Transmission Control Protocol, UDP/IP; UDP, User Datagram Protocol, Internet Control Message Protocol (ICMP), ...). If necessary, the user equipment UE and the network element of the UMTS network echo back the Request and Replied messages. No IP messages are generated expressly for the distribution of QoS data only.

In the following, two examples illustrating the echoing back of the Request and Replied fields are presented:
1. UE requests downlink bit error ratio (BER) and for some reason RNC is unwilling to put downlink QoS data into IP packets going in the uplink direction and requested by UE. In this case, the UMTS network element echoes the Request message into the next IP packet going in the downlink direction.
2. UE requests uplink bit error ratio (BER) and RNC adds the required QoS data to the Replied field in the IP packet and removes the Request field. The UMTS network element detects that the UE is asking for the QoS data in question. In this case, the UMTS network element echoes the Replied field including the QoS data into the next IP packet going in the downlink direction.

The IP stacks that add QoS data to IP packets and mend said data have to be able to carry out the required optimization. In the following, two examples of undesirable combinations are presented:
1. Going from a UMTS network element towards UE is an IP packet in which the Replied field contains uplink BER data (requested by UE) and at the same time a request for uplink BER data (requested by Core). The UMTS network element should be able to utilize the already available Replied field BER data, which is to be echoed in any case.
2. Going from a UMTS network element in the direction of UE is an IP packet containing a downlink BER Request originated by UE and a downlink BER Request originated by the UMTS network element. The UMTS network element should drop the downlink BER Request field originated by UE, because UE must in any case echo back downlink BER data in the Replied field.

In the following, a few examples of the use of Request-Reply options will be presented:
1. A downlink Line rate Request by UE: 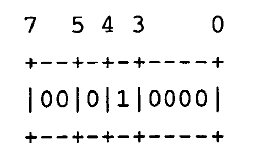
2. A Replied downlink Line rate echoed by a UMTS network element to UE in response to UE's request: 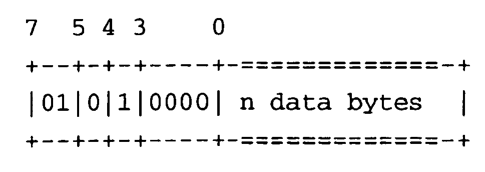
3. A NotSupported in reply to UE's downlink Line rate request (UMTS network element sends to UE):

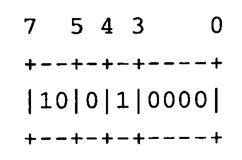

When QoS data is to be added to an IPv4-protocol packet, normal ways of making an extension header are used, as defined in the RFC791. The composition of the Option type field is presented below. The QoS data (several items of QoS data can be placed under a single extension header) and information are coded into the IPv4 extension, placed after the Option type as "variable length" type data:

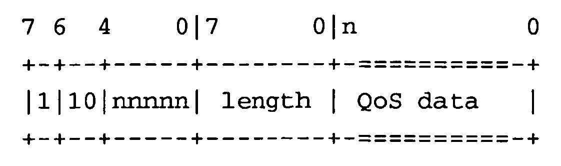

Nnnnn is the extension type number, which has to be registered via the IANA (IANA, Internet Address Naming Authority).

When QoS data is to be added to an IPv6-protocol packet, normal ways of making an extension header are used, as defined in RFC2460. The composition of the Option type field is presented below. The QoS data (several items of QoS data can be placed under a single extension header) and information are coded into the IPv6 extension, placed after the Option type as "variable length" type data:

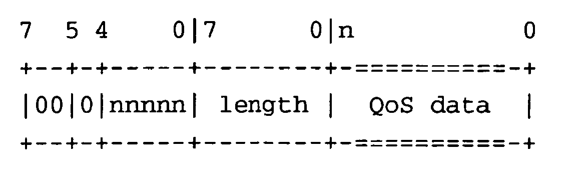

Nnnnn is the extension type number, which has to be registered via the IANA.

The invention is not restricted to the examples of its embodiments described above; instead, many variations are possible within the scope of the inventive idea defined in the claims.

## Claims

1. Method for monitoring, transferring and distributing channel-specific QoS data in a packet-switched mobile communication network, said method comprising the steps of:
collecting QoS data in different elements of the packet-switched mobile communication network;
**characterized in that** the method further comprises the steps of:
retrieving the QoS data by a monitoring agent, which is in each of at least two elements of the packet-switched mobile communication network;
processing the QoS data by at least one of said monitoring agents; and
transferring the QoS data in IP header data extension fields by said monitoring agents.

2. Method according to claim 1, **characterized in that** each QoS value is preceded in the IP packet by a header field telling the QoS data desired.

3. Method according to claim 1 or 2, **characterized in that** the header field consists of a message type field, a requester field, a direction field and a type field.

4. Method according to claim 1, 2 or 3, **characterized in that** the method further comprises the steps of:
requesting the QoS data by a Request field; and
answering the request by a Replied field.

5. Method according to claim 1, **characterized in that**, to add the QoS data to an IPv4 packet, ways of forming an extension header as defined in the RFC791 are used.

6. Method according to claim 1, **characterized in that**, to add the QoS data to an IPv6 packet, ways of forming an extension header as defined in the RFC2460 are used.

7. Method according to claim 1, **characterized in that** the QoS data is processed by pre-processing and refining the QoS data by at least one of said monitoring agents into the form used by the applications that need the QoS data.

8. Method according to claim 1, **characterized in that** the QoS data in the header data extension fields is distributed to user applications by a monitoring agent of a user equipment.

9. Method according to claim 1, **characterized in that** an IP packet provided with the QoS data must not be fragmented.

10. System for transferring and distributing channel-specific QoS data in a packet-switched mobile communication network, said system comprising:
a packet-switched mobile communication network (NET);
user equipment (UE) communicating with the packet-switched mobile communication network (NET);
QoS components (QoS) used to collect QoS data from different elements of the packet-switched mobile communication network (NET);
**characterized in that** the system further comprises:
a monitoring agent (MA) in each of at least two elements of the packet-switched mobile communication network, which monitoring agent (MA) comprises:
information retrieval means (IM) for retrieving the QoS data from the QoS components (QoS) of the elements of the packet-switched mobile communication network;
processing means (HM) for pre-processing and refining the QoS data in at least one of said monitoring agents;
setting means (SM) for setting the QoS data into a header data extension field of an IP packet; and
removal means (RM) for removing the QoS data from the header data extension field of an IP packet.

11. System according to claim 10, **characterized in that** the system further comprises communication means (CM) for distributing the QoS data to applications that use the QoS data.

12. System according to claim 10 or 11, **characterized in that** the IP packet is consistent with the IPv4 or IPv6 version.

13. System according to claim 10, 11 or 12, **characterized in that** the packet-switched mobile communication network is a UMTS network.

14. Computer program for monitoring, transferring and distributing channel-specific QoS data in a packet-switched mobile communication network, wherein the computer program is adapted to perform the following step when executed on a data-processing device:
collecting QoS data in different elements of the packet-switched mobile communication network;
**characterized in that** the computer program is further adapted to perform the following steps when executed on a data-processing device:
retrieving the QoS data from QoS components of the elements of the packet-switched mobile communication network;
pre-processing and refining the QoS data;
setting the QoS data into a header data extension field of an IP packet; and
removing the QoS data from the header data extension field of an IP packet.

15. Computer program according to claim 14, **characterized in that** each QoS value is preceded in the IP packet by a header field telling the QoS data desired.

16. Computer program according to claim 14 or 15, **characterized in that** the header field consists of a message type field, a requester field, a direction field and a type field.

17. Computer program according to claim 14, 15 or 16, **characterized in that** the computer program is further adapted to perform the following steps when executed on a data-processing device:
requesting the QoS data by a Request field; and
answering the request by a Replied field.

18. Computer program according to claim 14, **characterized in that**, to add the QoS data to an IPv4 packet, ways of forming an extension header as defined in the RFC791 are used.

19. Computer program according to claim 14, **characterized in that**, to add the QoS data to an IPv6 packet, ways of forming an extension header as defined in the RFC2460 are used.

20. Computer program according to claim 14, **characterized in that** the QoS data is preprocessed and refined into the form used by the applications that need the QoS data.

21. Computer program according to claim 14, **characterized in that** an IP packet provided with the QoS data must not be fragmented.

## Patentansprüche

1. Verfahren zum Überwachen, Übertragen und Verteilen von kanalspezifischen QOS-Daten in einem Packet-Switched- bzw. Datenpaket-Mobilkommunikationsnetzwerk, wobei das Verfahren die folgenden Verfahrensschritte aufweist:
Sammeln von QOS-Daten in unterschiedlichen Elementen des Datenpaket-Mobilkommunikationsnetzwerks;
**dadurch gekennzeichnet, dass** das Verfahren weiterhin die folgenden Verfahrensschritte aufweist:
Abfragen der QOS-Daten durch ein Überwachungsmittel, welches sich in jedem von zumindest zwei Elementen des Datenpaket-Mobilkommunikationsnetzwerks befindet;
Verarbeiten der QOS-Daten durch zumindest eines der Überwachungsmittel; und
Übertragen der QOS-Daten in Erweiterungsfelder von IP-Datenheadern durch die Überwachungsmittel.

2. Verfahren nach Anspruch 1, **dadurch gekennzeichnet, dass** jedem QOS-Wert in dem IP-Packet ein Header-Feld voransteht, welches die gewünschten QOS-Daten ankündigt.

3. Verfahren nach Anspruch 1 oder 2, **dadurch gekennzeichnet, dass** das Header-Feld aus einem Nachrichtentypfeld, einem Anforderungsfeld, einem Richtungsfeld und einem Typenfeld besteht.

4. Verfahren nach Anspruch 1, 2 oder 3, **dadurch gekennzeichnet, dass** das Verfahren weiterhin folgende Verfahrensschritte aufweist:
Anfordern der QOS-Daten durch ein Anforderungsfeld; und
Beantworten der Anforderung durch ein Antwortfeld.

5. Verfahren nach Anspruch 1, **dadurch gekennzeichnet, dass** zum Anfügen der QOS-Daten an ein IPv4-Packet Verfahren zum Bilden eines Erweiterungs-Headers, wie in der RFC791 definiert ist, verwendet werden.

6. Verfahren nach Anspruch 1, **dadurch gekennzeichnet, dass** zum Anfügen der QOS-Daten an ein IPv6-Packet Verfahren zum Bilden eines Erweiterungs-Headers, wie in der RFC2460 definiert ist, verwendet werden.

7. Verfahren nach Anspruch 1, **dadurch gekennzeichnet, dass** die QOS-Daten durch ein Vorverarbeiten und ein Verfeinern der QOS-Daten durch zumindest eins der Überwachungsmittel in die Form verarbeitet werden, welche von den Anwendungen verwendet wird, die die QOS-Daten benötigen.

8. Verfahren nach Anspruch 1, **dadurch gekennzeichnet, dass** die QOS-Daten in den Erweiterungsfeldern der Datenheader durch ein Überwachungsmittel einer Benutzergerätschaft auf Benutzeranwendungen verteilt werden.

9. Verfahren nach Anspruch 1, **dadurch gekennzeichnet, dass** ein IP-Packet, welches mit den QOS-Daten versehen ist, unfragmentiert sein muss.

10. System zur Übertragung und Verteilung von kanalspezifischen QOS-Daten in einem Datenpaket-Mobilkommunikationsnetzwerk, wobei das System Folgendes aufweist:
ein Datenpaket-Mobilkommunikationsnetzwerk (NET);
eine Benutzergerätschaft (UE) zur Kommunikation mit dem Datenpaket-Mobilkommunikationsnetzwerk (NET);
QOS-Komponenten (QOS) zur Verwendung zum Sammeln von QOS-Daten von unterschiedlichen Elementen des Datenpaket-Mobilkommunikationsnetzwerks (NET);
**dadurch gekennzeichnet, dass** das System weiterhin Folgendes aufweist:
ein Überwachungsmittel (MA) in jedem von zumindest zwei Elementen des Datenpaket-Mobilkommunikationsnetzwerks, wobei das Überwachungsmittel (MA) Folgendes aufweist;
Informationsabfrageeinrichtungen (IM) zur Abfrage der QOS-Daten von den QOS-Komponenten (QOS) der Elemente des Datenpaket-Mobilkommunikationsnetzwerks;
Verarbeitungseinrichtungen (HM) zur Vorverarbeitung und Verfeinerung der QOS-Daten in zumindest einem der Überwachungsmittel;
Einfügeeinrichtungen (SM) zur Einfügung der QOS-Daten in ein Erweiterungsfeld eines Datenheaders eines IP-Packets; und
Entfernungseinrichtungen (RM) zur Entfernung der QOS-Daten von dem Erweiterungsfeld eines Datenheaders eines IP-Packets.

11. System nach Anspruch 10, **dadurch gekennzeichnet, dass** das System weiterhin Kommunikationseinrichtungen (CM) zur Verteilung der QOS-Daten auf Anwendungen, welche die QOS-Daten verwenden, aufweist.

12. System nach Anspruch 10 oder 11, **dadurch gekennzeichnet, dass** das IP-Packet mit der IPv4- oder IPv6-Version übereinstimmt.

13. System nach Anspruch 10, 11 oder 12, **dadurch gekennzeichnet, dass** das Datenpaket-Mobilkommunikationsnetzwerks ein UMTS-Netzwerk ist.

14. Computerprogramm zur Überwachung, Übertragung und Verteilung von kanalspezifischen QOS-Daten in einem Datenpaket-Mobilkommunikationsnetzwerk, wobei das Computerprogramm zur Durchführung des folgenden Verfahrensschritts angepasst ist, wenn es auf einer Datenverarbeitungsvorrichtung ausgeführt wird:
Sammeln von QOS-Daten in unterschiedlichen Elementen des Datenpaket-Mobilkommunikationsnetzwerks (NET);
**dadurch gekennzeichnet, dass** das Computerprogramm weiterhin zur Durchführung der folgenden Verfahrensschritte angepasst ist, wenn es auf einer Datenverarbeitungsvorrichtung ausgeführt wird:
Abfragen der QOS-Daten von QOS-Komponenten der Elemente des Datenpaket-Mobilkommunikationsnetzwerks;
Vorverarbeiten und Verfeinern der QOS-Daten;
Einfügen der QOS-Daten in ein Erweiterungsfeld eines Datenheaders eines IP-Packets; und
Entfernen der QOS-Daten von dem Erweiterungsfeld eines Datenheaders eines IP-Packets.

15. Computerprogramm nach Anspruch 14, **dadurch gekennzeichnet, dass** jedem QOS-Wert in dem IP-Packet ein Header-Feld voransteht, welches die gewünschten QOS-Daten ankündigt.

16. Computerprogramm nach Anspruch 14 oder 15, **dadurch gekennzeichnet, dass** das Header-Feld aus einem Nachrichtentypfeld, einem Anforderungsfeld, einem Richtungsfeld und einem Typenfeld besteht.

17. Computerprogramm nach Anspruch 14, 15 oder 16, **dadurch gekennzeichnet, dass** das Computerprogramm weiterhin zur Durchführung der folgenden Verfahrensschritte angepasst ist, wenn es auf einer Datenverarbeitungsvorrichtung ausgeführt wird:
Anfordern der QOS-Daten durch ein Anforderungsfeld; und
Beantworten der Anforderung durch ein Antwortfeld.

18. Computerprogramm nach Anspruch 14, **dadurch gekennzeichnet, dass** zum Anfügen der QOS-Daten an ein IPv4-Packet Verfahren zum Bilden eines Erweiterungs-Headers, wie in der RFC791 definiert ist, verwendet werden.

19. Computerprogramm nach Anspruch 14, **dadurch gekennzeichnet, dass** zum Anfügen der QOS-Daten an ein IPv6-Packet Verfahren zum Bilden eines Erweiterungs-Headers, wie in der RFC2460 definiert ist, verwendet werden.

20. Computerprogramm nach Anspruch 14, **dadurch gekennzeichnet, dass** die QOS-Daten in die Form, welche von den Anwendungen verwendet wird, die die QOS-Daten benötigen, vorverarbeitet und verfeinert werden.

21. Computerprogramm nach Anspruch 14, **dadurch gekennzeichnet, dass** ein IP-Packet, welches mit den QOS-Daten versehen ist, unfragmentiert sein muss.

## Revendications

1. Procédé de surveillance, de transfert et de distribution de données QoS (de qualité de service) par canal de diffusion dans un réseau de communication mobile à commutation de paquets, ledit procédé comprenant les étapes consistant à :
collecter des données QoS dans différents éléments du réseau de communication mobile à commutation de paquets ;
**caractérisé en ce que** le procédé comprend en outre les étapes consistant à:
récupérer les données QoS au moyen d'un agent de surveillance, qui se trouvent dans chacun d'au moins deux éléments du réseau de communication mobile à commutation de paquets ;
traiter les données QoS au moyen d'au moins un des agents de surveillance ; et
transférer les données QoS dans des champs d'extension de données d'en-tête IP au moyen desdits agents de surveillance.

2. Procédé selon la revendication 1, **caractérisé en ce que** chaque valeur QoS est précédée dans le paquet IP par un champ d'en-tête indiquant les données QoS souhaitées.

3. Procédé selon la revendication 1 ou 2, **caractérisé en ce que** le champ d'en-tête est constitué par un champ de type de message, un champ demandeur, un champ de direction et un champ type.

4. Procédé selon la revendication 1, 2, ou 3, **caractérisé en ce que** le procédé comprend en outre les étapes consistant à :
demander les données QoS au moyen d'un champ de requête ; et
répondre à la requête au moyen d'un champ de réponse.

5. Procédé selon la revendication 1, **caractérisé en ce que**, afin d'ajouter les données QoS à un paquet IPv4, on utilise les moyens de formation d'un en-tête d'extension tels que définis par le standard RFC791.

6. Procédé selon la revendication 1, **caractérisé en ce que**, afin d'ajouter les données QoS à un paquet IPv6, on utilise les moyens de formation d'un en-tête d'extension tels que définis par le standard RFC2460.

7. Procédé selon la revendication 1, **caractérisé en ce que** les données QoS sont traitées par prétraitement et raffinement des données QoS au moyen d'au moins un des agents de surveillance sous la forme utilisée par les applications qui ont besoin des données QoS.

8. Procédé selon la revendication 1, **caractérisé en ce que** les données QoS dans les champs d'extension de données d'en-tête sont distribuées aux applications utilisateur par un agent de surveillance d'un équipement d'utilisateur.

9. Procédé selon la revendication 1, **caractérisé en ce qu'**un paquet IP contenant les données QoS ne doit pas être fragmenté.

10. Système de transfert et de distribution de données QoS par canal de diffusion dans un réseau de communication mobile à commutation de paquets, ledit système comprenant :
un réseau de communication mobile à commutation de paquets (NET);
un équipement d'utilisateur (UE) communiquant avec le réseau de communication mobile à commutation de paquets (NET) ;
des composants QoS (QoS) utilisés pour collecter des données QoS depuis différents éléments du réseau de communication mobile à commutation de paquets (NET) ;
**caractérisé en ce que** le système comprend en outre :
un agent de surveillance (MA) dans chacun d'au moins deux éléments du réseau de communication mobile à commutation de paquets, lequel agent de surveillance (MA) comprend :
des moyens de récupération d'information (IM) destinés à récupérer les données QoS des composants QoS (QoS) des éléments du réseau de communication mobile à commutation de paquets ;
des moyens de traitement (HM) destinés à prétraiter et raffiner les données QoS dans au moins l'un desdits agents de surveillance ;
des moyens de réglage (SM) destinés à régler les données QoS dans un champ d'extension de données d'en-tête d'un paquet IP ; et
des moyens de suppression (RM) destinés à supprimer les données QoS du champ d'extension de données d'en-tête d'un paquet IP.

11. Système selon la revendication 10, **caractérisé en ce que** le système comprend en outre des moyens de communication (CM) destinés à distribuer les données QoS aux applications qui utilisent les données QoS.

12. Système selon la revendication 10 ou 11, **caractérisé en ce que** le paquet IP est compatible avec la version IPv4 ou IPv6.

13. Système selon la revendication 10, 11 ou 12, **caractérisé en ce que** le réseau de communication mobile à commutation de paquets est un réseau UMTS.

14. Programme informatique destiné à surveiller, transférer et distribuer des données QoS par canal de diffusion dans un réseau de communication mobile à commutation de paquets, dans lequel le programme informatique est adapté pour effectuer l'étape suivante lorsqu'il est exécuté sur un dispositif de traitement de l'information :
collecte des données QoS dans différents éléments du réseau de communication mobile à commutation de paquets ;
**caractérisé en ce que** le programme informatique est en outre adapté pour effectuer les étapes suivantes lorsqu'il est exécuté sur un dispositif de traitement de l'information :
récupération des données QoS depuis les composants des éléments du réseau de communication mobile à commutation de paquets;
prétraitement et raffinement des données QoS;
réglage des données QoS dans un champ d'extension de données d'en-tête d'un paquet IP ; et
suppression des données QoS du champ d'extension de données d'en-tête d'un paquet IP.

15. Programme informatique selon la revendication 14, **caractérisé en ce que** chaque valeur QoS est précédée dans le paquet IP par un champ d'en-tête indiquant les données QoS souhaitées.

16. Programme informatique selon la revendication 14 ou 15, **caractérisé en ce que** le champ d'en-tête est constitué par un champ de type de message, un champ demandeur, un champ de direction et un champ type.

17. Programme informatique selon la revendication 14, 15 ou 16, **caractérisé en ce que** le programme informatique est en outre adapté pour effectuer les étapes suivantes lorsqu'il est exécuté sur un dispositif de traitement de l' information :
requête des données QoS au moyen d'un champ de requête ; et
réponse à la requête au moyen d'un champ de réponse.

18. Programme informatique selon la revendication 14, **caractérisé en ce que**, afin d'ajouter les données QoS à un paquet IPv4, on utilise les moyens de formation d'un en-tête d'extension tels que définis par le standard RFC791.

19. Programme informatique selon la revendication 14, **caractérisé en ce que**, afin d'ajouter les données QoS à un paquet IPv6, on utilise les moyens de formation d'un en-tête d'extension tels que définis par le standard RFC2460.

20. Programme informatique selon la revendication 14, **caractérisé en ce que** les données QoS sont prétraitées et raffinées sous la forme utilisée par les applications qui ont besoin des données QoS.

21. Programme informatique selon la revendication 14, **caractérisé en ce qu'**un paquet IP muni des données QoS ne doit pas être fragmenté.
